Europäisches Patentamt

European Patent Office

Office européen des brevets

(19)

(11) Veröffentlichungsnummer : **0 515 625 B1**

## (12) EUROPÄISCHE PATENTSCHRIFT

(45) Veröffentlichungstag der Patentschrift :
07.06.95 Patentblatt 95/23

(51) Int. Cl.$^6$ : **G01N 21/64,** G01N 21/80,
G01N 31/22

(21) Anmeldenummer : 92901022.1

(22) Anmeldetag : 12.12.91

(86) Internationale Anmeldenummer :
PCT/AT91/00128

(87) Internationale Veröffentlichungsnummer :
WO 92/10739 25.06.92 Gazette 92/14

(54) INDIKATORSUBSTANZ EINER FLUORESZENZOPTISCHEN MESSANORDNUNG ZUR MESSUNG DES PH-WERTES EINER PROBE SOWIE OPTISCHER SENSOR MIT EINER DERARTIGEN INDIKATORSUBSTANZ.

(30) Priorität : 12.12.90 AT 2512/90

(43) Veröffentlichungstag der Anmeldung :
02.12.92 Patentblatt 92/49

(45) Bekanntmachung des Hinweises auf die
Patenterteilung :
07.06.95 Patentblatt 95/23

(84) Benannte Vertragsstaaten :
AT DE FR GB

(56) Entgegenhaltungen :
EP-A- 0 354 204
EP-A- 0 397 641
SPIE CHEMICAL, BIOCHEMICAL AND ENVI-
RONMENTAL FIBER SENSORS II Bd. 1368,
1990,Seiten 157 - 164; MORENO-BONDI ET
AL.: 'NEW LUMINESCENT METAL COMPLEX
FOR PH TRANSDUCTION IN OPTICAL FIBER
SENSING. APPLICATION TO A CO2-SENSI-
TIVE DEVICE'

(73) Patentinhaber : AVL Medical Instruments AG
Stettemerstrasse 28
CH-8207 Schaffhausen (CH)

(72) Erfinder : LIPPITSCH, Max, Dr.
Steingrabenweg 26
A-8044 Graz (AT)
Erfinder : LEINER, Marco, Jean-Pierre, Dr.
Radegunderstrasse 30a
A-8045 Graz (AT)
Erfinder : KARPF, Hellfried,Dr.
Schwarzbauerweg 25
A-8043 Graz (AT)

(74) Vertreter : Krause, Walter, Dr. Dipl.-Ing. et al
Postfach 200
Singerstrasse 8
A-1014 Wien (AT)

## Beschreibung

Die Erfindung betrifft eine Indikatorsubstanz für eine lumineszenzoptische Meßanordnung zur kontinuierlichen, reversiblen Messung des pH-Wertes einer Probe innerhalb eines interessierenden Meßbereiches, wobei die Probe mit der als Säure oder Base vorliegenden Indikatorsubstanz in zumindest indirektem Kontakt steht und die Lumineszenzabklingzeit $\tau$ der Indikatorsubstanz vom pH-Wert der Probe abhängt, sowie einen Sensor mit einer derartigen Indikatorsubstanz.

Die Messung des pH-Wertes ist in vielen wissenschaftlichen und technischen Gebieten, wie etwa Chemie, Verfahrenstechnik, Fertigungstechnik oder Umweltanalytik, essentiell. Optische Verfahren bzw. Vorrichtungen zur Messung dieser Größe sind bereits vielfach vorgeschlagen worden. Eine Übersicht über den aktuellen Stand der Technik geben LEINER & WOLFBEIS: Fiber Optic pH Sensors, in: CRC Book on Fiber Optic Chemical Sensors and Biosensors, O.S.WOLFBEIS (ed.), CRC Press Inc., Boca Raton, Florida 1991. Es haben sich insbesondere zwei Methoden als brauchbar erwiesen: Messung des pH-Wertes über die Änderung der Absorption sowie Messung über die Änderung der Lumineszenz eines geeigneten Indikators. Absorptionsoptische Sensoren zeichnen sich durch größere Einfachheit des Konzepts aus, sind jedoch in der technischen Durchführung mit beträchtlichen Problemen konfrontiert (geringe Signaländerungen, hohes Streulicht, mangelnde Langzeitstabilität etc). Lumineszenzoptische Sensoren umgehen einige dieser Probleme, ihre Langzeitstabilität ist jedoch häufig unzureichend, da die Konzentration des Indikators durch verschiedene Einflüsse mit der Zeit verändert wird und dadurch Signaländerungen entstehen, die das Meßergebnis verfälschen.

Eine Methode, die Langzeitstabilität von lumineszenzoptischen, insbesondere fluoreszenzoptischen Sensoren entscheidend zu verbessern, besteht darin, nicht die Fluoreszenzintensität sondern die Abklingzeit der Fluoreszenz für die Messung heranzuziehen (LIPPITSCH et al., *Analytica Chimica Acta* 205 (1988), 1-6). Die Lumineszenz- bzw. Fluoreszenzabklingzeit ist weitgehend unabhängig von der Indikatorkonzentration und vermeidet daher konzentrationsbedingte Meßfehler. Lumineszenzoptische Sensoren mit Abklingzeitmessung werden bisher vor allem für physikalische Meßgrößen (z.B. Temperatur) und für Sauerstoffkonzentrationsmessungen entwickelt. Lumineszenzoptische pH-Sensoren konnten lange Zeit nicht realisiert werden, da keine Indikatorsubstanzen bekannt waren, welche auf eine Änderung des pH-Wertes mit einer reversiblen Änderung der Lumineszenzabklingzeit reagieren.

Es wurden bisher erst zwei Versuche unternommen, fluoreszenzoptische pH-Sensoren auf der Basis der Abklingzeitmessung zu realisieren.

So ist es aus der AT-PS 393 035 bekannt geworden, in einem optischen Sensor zwei in räumlich engem Kontakt stehende Substanzen vorzusehen, wobei die erste Substanz ein auf den zu bestimmenden pH-Wert nicht ansprechender Fluorophor und die zweite Substanz ein die Fluoreszenz des Fluorophors beeinflussender Chromophor ist. Die durch den Energietransfer zwischen Chromophor und Fluorophor hervorgerufene Verringerung der Fluoreszenzabklingzeit $\tau$ wird zur quantitativen Bestimmung des pH-Wertes herangezogen. Das Ausmaß des Energietransfers hängt jedoch von der Überlappung des Fluoreszenzspektrums des Fluorophors (Donor) mit dem Absorptionsspektrum des pH-Indikators (Akzeptor) und ihrem räumlichen Abstand zusammen und ist daher in nachteiliger Weise von der räumlichen Verteilung bzw. der Konzentration der beiden Substanzen abhängig. Damit geht der wesentliche Vorteil der Abklingzeitsensoren, nämlich die Unabhängigkeit von der Konzentration des Indikators, verloren.

Die zweite Realisierung eines Abklingzeitsensors für den pH-Wert wurde aus "New luminescent metal complex for pH transduction in optical fiber sensing" M.C. MORENO-BONDI et al. SPIE 1368, 1990, 157-164 bekannt. Dabei wird eine Indikatorsubstanz verwendet, z.B. ein Rutheniumkomplex, dessen Fluoreszenz durch Säuren dynamisch gequencht wird, wodurch sich die Fluoreszenzabklingzeit ändert. Allerdings wird das Ausmaß des Quenchens durch Art und Konzentration des Puffers sowie durch die chemische Zusammensetzung der quenchenden Säure und nur indirekt durch den pH-Wert bestimmt. Damit ist eine sinnvolle Anwendung als pH-Sensor in vielen Fällen unmöglich.

Verwendete Abkürzungen:

| | |
|---|---|
| * | elektronisch angeregter Zustand |
| [] | Konzentration |
| AH | Säure |
| $A^-$ | konjugierte Base |
| $H^+$ | Proton |
| pH=-log($H^+$) | pH-Wert |
| B | Base |
| $BH^+$ | konjugierte Säure |

| $K_s$ | Säurekonstante (Dissoziationsgleichgewichtskonstante einer Säure) |
| $pK_S=-log(K_S)$ | pK-Wert einer Säure oder einer konjugierten Säure |
| $k_R$ | Strahlungsabklingrate |
| $k_C$ | strahlungslose Deexcitationsrate ($S_1$-$S_0$ Internal conversion oder $S_1$-$T_1$ intersystem crossing) |
| $k_A$ | Abklingrate des angeregten Zustands (Lumineszenzabklingrate) |
| | $k_A = k_R + k_C$ |
| $\tau$ | Lebensdauer des angeregten Zustands (Lumineszenzabklingzeit) |
| | $\tau = 1/k_A$ |
| $k_{S,X}$ | Strahlungslose Konversionsrate vom elektronisch angeregten Zustand $S_1$ zu einem elektronisch angeregten Zustand X |
| $k_p$ | Protonierungsrate |
| $k_{dp}$ | Deprotonierungsrate |

Im folgenden wird die BRÖNSTED-LOWRY Definition für Säuren und Basen verwendet:

Säuren:

Reaktion:       Säurekonstante:

$$AH \Leftrightarrow A^- + H^+ \qquad K_S = \frac{[A^-][H^+]}{[AH]}$$

Basen:

Reaktion:       Säurekonstante:

$$BH^+ \Leftrightarrow B + H^+ \qquad K_S = \frac{[B][H^+]}{[BH^+]}$$

Aufgabe der Erfindung ist es, die Nachteile bekannter Abklingzeitsensoren zur Messung des pH-Wertes zu vermeiden und Indikatorsubstanzen vorzuschlagen, mit welchem die direkte Bestimmung des pH-Wertes möglich ist.

Diese Aufgabe wird erfindungsgemäß dadurch gelöst, daß 1.) der pKs-Wert der Indikatorsubstanz in deren elektronischen Grundzustand ($S_0$) im interessierenden Meßbereich liegt, daß die Protonierungsrate $k_p$ der Base oder die Deprotonierungsrate $k_{dp}$ der Säure im angeregten Zustand ($S_1$, X) der Indikatorsubstanz kleiner ist als die Abklingrate $k_A$ des angeregten Zustandes, sowie daß die Lumineszenzabklingzeiten $\tau_S$ und $\tau_B$ der Säureformen (AH*, BH$^+$*) und der Basenformen (A$^-$*, B*) der Indikatorsubstanz verschieden sind oder daß 2.) der pKs*-Wert der Indikatorsubstanz in deren elektronisch angeregten Zustand ($S_1$, X) im interessierenden Meßbereich liegt, daß die Protonierungsrate $k_p$ der Base oder die Deprotonierungsrate $k_{dp}$ der Säure im angeregten Zustand ($S_1$, X) der Indikatorsubstanz größer ist als die Abklingrate $k_A$ des angeregten Zustandes, sowie daß die Lumineszenzabklingzeiten $\tau_S$ und $\tau_B$ der Säureformen (AH*, BH$^+$*) und der Basenformen (A$^-$*, B*) der Indikatorsubstanz verschieden sind. Die gemessene Lumineszenzabklingzeit $\tau$ ist in beiden grundlegenden Fällen eine Funktion der Lumineszenzabklingzeiten $\tau_B$ und $\tau_S$ wobei deren Gewichtung von dem in der Probe vorherrschenden pH-Wert abhängt.

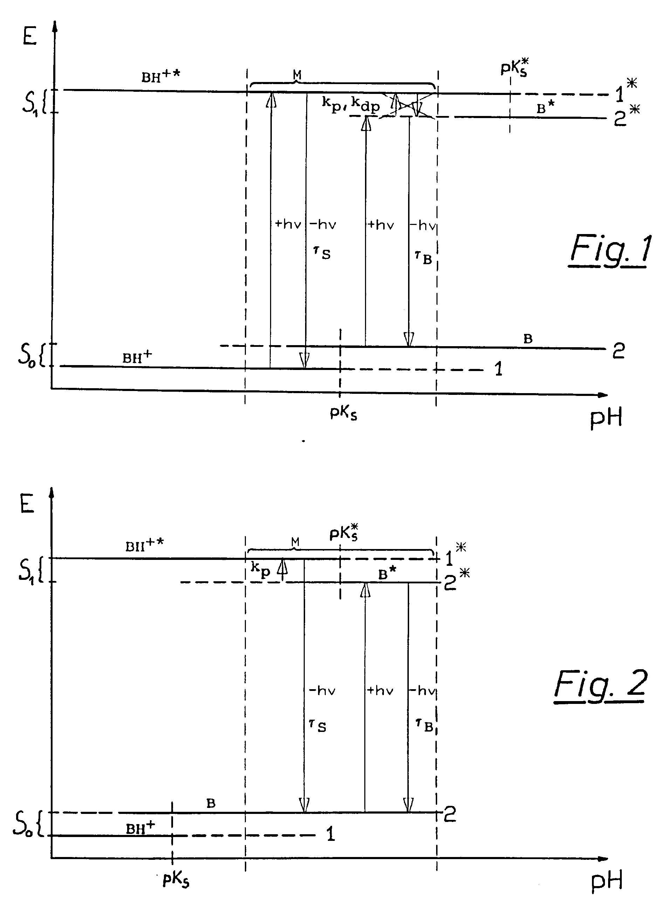

Die grundlegenden Eigenschaften der erfindungsgemäßen Indikatorsubstanzen werden schematisch in den Diagrammen der Fig. 1 und 2 dargestellt.

Verschiedene Gruppen von Indikatorsubstanzen können nun dadurch unterschieden werden, wie die unterschiedlichen Lumineszenzabklingzeiten $\tau_B$ und $\tau_S$ zustande kommen.

So wird von einer ersten Gruppe erfindungsgemäß gefordert, daß zumindest zwei angeregte Zustände ($S_1$, X) der Neutralform der Indikatorsubstanz (Base B* oder Säure AH*) relativ zueinander in umgekehrter Anordnung vorliegen als die korrespondierenden angeregten Zustände der ionischen Form der Indikatorsubstanz (konjugierte Säure BH$^+$* oder konjugierte Base A$^-$*), sowie daß die strahlungslose Konversionsrate zwischen den zumindest zwei angeregten Zuständen der Neutralform größer ist als die Abklingrate $k_A$ der angeregten Zustände der Neutralform.

Für eine zweite Gruppe ist erfindungsgemäß vorgesehen, daß die Strahlungsabklingrate $k_R$ der angeregten Neutralform der Indikatorsubstanz (Base B* oder Säure AH*) und der angeregten ionischen Form der In-

3

dikatorsubstanz (konjugierte Säure BH$^{+*}$ oder konjugierte Base A$^{-*}$) unterschiedlich sind.

Schließlich zeichnet sich eine dritte Gruppe von Indikatorsubstanzen dadurch aus, daß die strahlungslose Deexcitationsrate $k_C$ der angeregten Neutralform der Indikatorsubstanz (Base B* oder Säure AH*) und der angeregt ionischen Form der Indikatorsubstanz (konjugierte Säure BH$^{+*}$ oder konjugierte Base A$^{-*}$) unterschiedlich sind.

Ein lumineszenzoptischer Sensor zur kontinuierlichen, reversiblen Messung des pH-Wertes einer Probe weist erfindungsgemäß eine der in den drei Gruppen genannten Indikatorsubstanzen auf.

Es ergeben sich somit folgende, auf den nächsten vier Seiten zusammengefaßte Kriterien bzw. kennzeichnende Merkmale zur Auswahl von pH-sensitiven Indikatorsubstanzen, deren Lumineszenzabklingzeit $\tau$ direkt und reversibel vom pH-Wert einer Probe abhängt.

## 1. Protonierung bzw. Dissoziation der Indikatorsubstanz erfolgt im Grundzustand

Der pK$_S$-Wert der elektronisch nicht angeregten Säure (AH bzw. BH$^+$) liegt im interessierenden Meßbereich.

### 1.1. Indikatorbasen (B)

Die Deprotonierungsrate $k_{dp(BH^{+*} \to B^* + H^+)}$ der konjugierten Säure (BH$^+$) ist kleiner als ihre Lumineszenzabklingrate $k_{A(BH^{+*} \to BH^+ + h\nu)}$.

Die Lumineszenzabklingrate

$$k_{A(B^* \to B + h\upsilon)}$$

der elektronisch angeregten Base (B*) ist *groß* gegenüber ihrer Protonierungsrate $k_{p(B^* + H^+ \to BH^{+*})}$.

### 1.1.a.

Mindestens zwei Zustände (z.B. $\pi$-$\pi$* und n-$\pi$*) der elektronisch angeregten Base (B*) haben relativ zueinander umgekehrte energetische Positionen als die korrespondierenden elektronisch angeregten Zustände der konjugierten Säure (BH$^{+*}$). Die strahlungslose Konversionsrate $k_{S,X(S_1(BH^{+*}) \to X(BH^{+*}))}$ ist größer als die Lumineszenzabklingrate $k_A$ des angeregten Zustands S$_1$(BH$^{+*}$), so daß sich *unterschiedliche Lumineszenzabklingzeiten ($\tau$) der angeregten Zustände* (BH$^{+*}$ und B*) ergeben.

### 1.1.b.

Die Lumineszenzabklingrate

$$k_{A(B^* \to B + h\upsilon)}$$

der elektronisch angeregten Base (B*) und die Lumineszenzabklingrate

$$k_{A(BH^{+*} \to BH^+ + h\upsilon)}$$

der elektronisch angeregten konjugierten Säure (BH$^{+*}$) sind verschieden (z.B. durch unterschiedliche Übergangswahrscheinlichkeiten und ähnlich hohe Quantenausbeute beider Formen). so daß sich *unterschiedliche Lumineszenzabklingzeiten ($\tau$) der angeregten Zustände* (BH$^{+*}$ und B*) ergeben.

### 1.1.c.

Die strahlungslose Deexcitationsrate $k_{C(B^* \to B)}$ ist für die angeregte Base (B*) verschieden von der strahlungslosen Deexcitationsrate $k_{C(BH^{+*} \to BH^+)}$ der angeregten konjugierten Säure (BH$^{+*}$), so daß sich *unterschiedliche Lumineszenzabklingzeiten ($\tau$) der angeregten Zustände* (BH$^{+*}$ und B*) ergeben.

### 1.2. Indikatorsäuren (AH)

Die Protonierungsrate $k_{p(A^{-*} \to A^- + h\nu)}$ der konjugierten Base (A$^{-*}$) im elektronisch angeregten Zustand ist kleiner als ihre Lumineszenabklingrate $k_{A(A^{-*} \to A^- + h\nu)}$.

Die Lumineszenzabklingrate

$$k_{A(AH^* \to AH + h\upsilon)}$$

der elektronisch angeregten Säure (AH*) ist groß gegenüber ihrer Deprotonierungsrate $k_{dp(AH^* \to A^{-*} + H^+)}$.

### 1.2.a

Mindestens zwei Zustände (z.B. $\pi$-$\pi$* und n-$\pi$*) der elektronisch angeregten Säure (AH*) haben relativ zueinander umgekehrte energetische Positionen als die korrespondierenden Zustände der elektronisch angeregten konjugierten Base (A$^{-*}$). Die strahlungslose Konversionsrate $k_{S,X(S_1(AH^*) \to X(AH^*))}$ ist grö-

4

ßer als die Lumineszenzabkligrate $k_A$ des angeregen Zustands $S_1(AH^*)$, so daß sich *unterschiedliche Lumineszenzabklingzeiten* ($\tau$) *der angeregten Zustände* (AH* und A⁻*) ergeben.

**1.2.b.**

Die Lumineszenzabklingrate

$$k_{A(AH^* \to AH + h\upsilon)}$$

der elektronisch angeregten Säure (AH*) und die Lumineszenzabklingrate

$$k_{A(A^{-*} \to A^- + h\upsilon)}$$

der elektronisch angeregten konjugierten Base (A⁻*) sind verschieden (z.B. durch unterschiedliche Übergangswahrscheinlichkeiten und ähnlich hohe Quantenausbeute beider Formen), so daß sich *unterschiedliche Lumineszenzabklingzeiten* ($\tau$) *der angeregten Zustände* (AH* und A⁻*) ergeben.

**1.2.c.**

Die strahlungslose Deexcitationsrate $k_{C(AH^* \to AH)}$ ist für die angeregte Säure (AH*) verschieden von der strahlungslosen Deexcitationsrate $k_{C(A^{-*} \to A^-)}$ der angeregten konjugierten Base (A⁻*), so daß sich *unterschiedliche Lumineszenzabklingzeiten* ($\tau$) *der angeregten Zustände* (AH* und A⁻*) ergeben.

## 2. Protonierung bzw, Dissoziation der Indikatorsubstanz erfolgt im angeregten Zustand

Der $pK_S^*$-Wert der elektronisch angeregten Säure (AH* bzw. BH⁺*) liegt im interessierenden Meßbereich.

### 2.1. Indikatorbasen

Der $pK_S$ Wert der konjugierten Säure (BH⁺) im elektronischen Grundzustand ist *niedriger* als die untere Grenze des interessierenden Meßbereichs.

Die Lumineszenzabklingrate

$$k_{A(B^* \to B + h\upsilon)}$$

der elektronisch angeregten Base (B*) ist *kleiner* als ihre Protonierungsrate $k_{p(B^* + H^+ \to BH^+*)}$, so daß *eine Protonierung im elektronisch angeregten Zustand* erfolgt.

**2.1.a**

Mindestens zwei Zustände (z.B. $\pi$-$\pi^*$ und n-$\pi^*$) der elektronisch angeregten konjugierten Säure (BH⁺*) haben relativ zueinander umgekehrte energetische Positionen als die korrespondierenden Zustände der elektronisch angeregten Base (B*). Die strahlungslose Konversionsrate $k_{S,X(S_1(BH^{+*}) \to X(BH^{+*}))}$ ist größer als die Lumineszenzabklingrate $k_A$ des angeregten Zustands $S_1(BH^{+*})$, so daß sich *unterschiedliche Lumineszenzabklingzeiten* ($\tau$) *der angeregten Zustände* (BH⁺* und B*) ergeben.

**2.1.b.**

Die Lumineszenzabklingrate

$$k_{A(B^* \to B + h\upsilon)}$$

der elektronisch angeregten Base (B*) und die Lumineszenzabklingrate

$$k_{A(BH^{+*} \to BH^+ + h\upsilon)}$$

der elektronisch angeregten konjugierten Säure (BH⁺*) sind verschieden (z.B. duch unterschiedliche Übergangswahrscheinlichkeiten und ähnlich hohe Quantenausbeute beider Formen). so daß sich *unterschiedliche Lumineszenzabklingzeiten* ($\tau$) *der angeregten Zustände* (BH⁺* und B*) ergeben.

**2.1.c.**

Die strahlungslose Deexcitationsrate $k_{C(B^* \to B)}$ ist für die angeregte Base (B*) verschieden von der strahlungslosen Deexcitationsrate $k_{C(BH^{+*} \to BH^+)}$ der angeregten konjugierten Säure (BH⁺*), so daß sich *unterschiedliche Lumineszenzabklingzeiten* ($\tau$) *der angeregten Zustände* (BH⁺* und B*) ergeben.

### 2.2. Indikatorsäuren

Der $pK_S$ Wert der Säure (AH) im elektronischen Grundzustand liegt *höher* als die obere Grenze des interessierenden Meßbereichs.

Die Lumineszenzabklingrate

$$k_{A(AH^* \to AH + h\upsilon)}$$

der elektronisch angeregten Säure (AH*) ist *kleiner* als ihre Deprotonierungsrate $k_{dp(AH^* \to A^{-*} + H^+)}$, so daß eine *Deprotonierung im elektronisch angeregten Zustand* erfolgt.

**2.2.a.**

Mindestens zwei Zustände (z.B. $\pi$-$\pi^*$ und n-$\pi^*$) der elektronisch angeregten Säure (AH*) haben relativ zueinander umgekehrte energetische Positionen als die korrespondierenden Zustände der elektronisch angeregten konjugierten Base (A$^{-*}$). Die strahlungslose Konversionsrate $k_{S_1 X(S_1(AH^*) \to X(AH^*))}$ ist größer als die Lumineszenzabkligrate $k_A$ des angeregten Zustands $S_1(AH^*)$, so daß sich *unterschiedliche Lumineszenzabklingzeiten* ($\tau$) *der angeregten Zustände* (AH* und A$^{-*}$) ergeben.

**2.2.b.**

Die Lumineszenzabklingrate

$$k_{A(AH^* \to AH + h\upsilon)}$$

der elektronisch angeregten Säure (AH*) und die Lumineszenzabklingrate

$$k_{A(A^{-*} \to A^- + h\upsilon)}$$

der elektronisch angeregten konjugierten Base (A$^{-*}$) sind verschieden (z.B. duch unterschiedliche Übergangswahrscheinlichkeiten und ähnlich hohe Quantenausbeute beider Formen), so daß sich *unterschiedliche Lumineszenzabklingzeiten* ($\tau$) *der angeregten Zustände* (AH* und A$^{-*}$) ergeben.

**2.2.c.**

Die strahlungslose Deexcitationsrate $k_{C(AH^* \to AH)}$ ist für die angeregte Säure (AH*) verschieden von der strahlungslosen Deexcitationsrate $k_{C(A^{-*} \to A^-)}$ der angeregten konjugierten Base (A$^{-*}$), so daß sich *unterschiedliche Lumineszenzabklingzeiten* ($\tau$) *der angeregten Zustände* (AH* und A$^{-*}$) ergeben.

Substanzen, welche die unter 1 und 2 angeführten Kriterien erfüllen, finden sich z.B. unter den Indikatorbasen, welche aliphatische oder aromatische Aminogruppen ($-NH_2$,$-NRH$,$-NR_2$) oder heterozytische Stickstoffverbindungen (=N-) enthalten. Die genannten Substanzen sind mit fallenden pH-Werten der Lösung in der Lage, Protonen an das freie Elektronenpaar des Stickstoffatoms zu binden.

Weiters existieren geeignete Substanzen unter den Indikatorsäuren, welche z.B. phenolische Hydroxygruppen (-OH), Carbonsäuregruppen (-COOH) enthalten. Diese geben mit zunehmenden pH-Werten der Lösung Protonen ab.

Andere unter die genannten Kriterien fallende Säure/Base-Indikatoren können nicht in dieses einfache Schema eingeordnet werden. Die pH-abhängige Änderung der spektralen Eigenschaften erfolgt hier über eine molekulare Umlagerung. Diese Umlagerung kann über mehrere Intermediate erfolgen.

Es eignen sich auch bereits früher in der Literatur im Zusammenhang mit der Messung der Fluoreszenzintensität genannte Indikatoren, wie Coumarine, Fluoresceine, Naphthyl- und Pyrenderivate.

Als mögliche Substituenten zur Beeinflussung des pK-Wertes der Indikatorsubstanz wären $-CH_3$, $-CF_3$, Cyano, Carboxy, Carboxyamido, Phenyl und höhere Halogenide zu nennen.

Als chromophorer Molekülteil der Indikatorsubstanzen kommen z.B. homo- oder heterozyklische (mono- oder polyzyklische) aromatische Kohlenwasserstoffe in Frage.

In einem Ausführungsbeispiel zu den unter 1. genannten Mechanismen wird der Indikator, z.B. auf einem festen Substrat, immobilisiert und mit der Probe in Kontakt gebracht. Die Anregung der Fluoreszenz erfolgt mit einer Kurzzeitlichtquelle (z.B. einer koaxialen Blitzlampe, einem gepulsten Laser, einer gepulsten Leuchtdiode), und zwar entweder (wenn die Absorptionsspektren von Neutralform und ionischer Form nicht überlappen) spektral so breitbandig, daß das zur Anregung dienende Spektrum die Absorption des Indikators sowohl in neutraler als auch in ionischer Form überdeckt oder (wenn die Absorptionsspektren der beiden Formen überlappen) spektral schmalbandig innerhalb der Wellenlänge des Überlappungsbereichs. Die Fluoreszenz wird nach Abtrennung des Anregungslichtes durch ein Kantenfilter spektral breitbandig detektiert (z.B. mit einem Photomultiplier oder einer pin-Photodiode) und die Abklingzeit elektronisch gemessen. Da es sich um eine Dissoziation im Grundzustand handelt, wird sowohl das Absorptions- als auch das Fluoreszenzspektrum verändert, was wegen der Breitbandigkeit der Anregung und der Detektion bzw. der Wahl der Anregungswellenlänge im Überschneidungsbereich der Absorptionsspektren und der breitbandigen Detektion jedoch zu keiner Beeinträchtigung der Messung führt. Über eine einmal abgespeicherte Eichfunktion können die gemessenen Abklingzeiten auf einem angeschlossenen Rechner in pH-Werte umgerechnet werden.

Im folgenden seien nun einige konkrete Beispiele für erfindungsgemäße Indikatorsubstanzen unter Erläuterung ihrer Funktionsweise angeführt.

Beispiel zu 1.1.b.

Indikatorbase: **Acridin**

| | |
|---|---|
| Anregungs- / Emissions-Maximum der konjugierten Säureform | : 356 / 475 nm |
| Anregungs- / Emissions-Maximum der Basenform | : 356 / 430 nm |
| Messbereich | : pH 4.0 - 7.0 |
| pKs der Säureform ($BH^+$) im Grundzustand | : 5.45 |
| pKs* der Säureform ($BH^*$) im angeregten Zustand | : 10.7 |

Lumineszenzabklingzeiten der angeregten Zustände:

$$\tau_{(BH^{+*})} = 33\ ns$$
$$\tau_{(B^*)} = 14\ ns$$

Im interessierenden Meßbereich (pH 4-7) liegen beide Formen ($BH^+$ und B) vor. Der $pK_S^*$ im angeregten Zustand ist um 5.25 Einheiten größer als der $pK_S$ im Grundzustand. Hierdurch erfolgt im angeregten Zustand keine Deprotonierung der konjugierten Säure ($BH^{+*}$). Die Lumineszenzabklingrate $k_A$ der elektronisch angeregten Base ($B^*$) ist größer als ihre Portonierungsrate $k_p$. Die Lumineszenzabklingrate $k_A$ der elektronisch angeregten Base ($B^*$) und der elektronisch angeregten konjugierten Säure ($BH^{+*}$) sind verschieden. Hierdurch ergeben sich unterschiedliche Lumineszenzabklingzeiten der angeregten Zustände ($\tau_{(BH^{+*})}$ = 33 ns, $\tau_{(B^*)}$ = 14 ns).

Beispiel zu 1.2.a.

Indikatorsäure: **Salicylaldehyd**

Anregungs- / Emissions-Maximum der Säureform : 327 / 525 nm
Anregungs- / Emissions-Maximum der konjugierten Basenform : 380 / 400 nm

Messbereich : pH 7 - 10
pKs der Säureform (AH) im Grundzustand : ca. 8.5
pKs* der Säureform (AH*) im angeregten Zustand : ca. 2

Lumineszenzabklingzeiten der angeregten Zustände:

$: \tau_{(AH^*)}$ = << 1 ns
$: \tau_{(A^*)}$ = ca. 3 ns

Im interessierenden Meßbereich (pH 7-9) liegen beide Formen (AH und A⁻) vor. Der $pK_S^*$ im angeregten Zustand ist ca. 6.5 Einheiten kleiner als der $pK_S$ im Grundzustand. Hierdurch erfolgt im angeregten Zustand keine Protonierung der konjugierten Base (A⁻*). Die Lumineszenzabklingrate $k_A$ der elektronisch angeregten Säure (AH*) ist größer als ihre Deprotonierungsrate $k_{dp}$. Zwei Zustände (π-π* und n-π*) der elektronisch angeregten Säure (AH*) haben relativ zueinander umgekehrte energetische Positionen als die korrespondierenden Zustände der elektronisch angeregten konjugierten Base (A⁻*). Die strahlungslose Konversionsrate $k_{S,X(S_1(AH^*) \to X(AH^*))}$ ist größe als die Lumineszenzabklingrate $k_A$ des angeregten Zustands $S_1$(AH*). Hierdurch ergeben sich unterschiedliche Lumineszenzabklingzeiten der angeregten Zustände ($\tau_{(AH^*)}$ << 1 ns, $\tau_{(A^{-*})}$ = ca. 3 ns ).

Beispiel zu 1.2.c.

Indikatorsäure: **Indol-3-essigsäure**

| | |
|---|---|
| Anregungs- / Emissions-Maximum der Säureform | : 278 / 340 nm |
| Anregungs- / Emissions-Maximum der konjugierten Basenform | : 285 / 340 nm |

| | |
|---|---|
| Messbereich | : pH 2 - 4 |
| pKs der Säureform (AH) im Grundzustand | : ca. 3 |
| pKs* der Säureform (AH*) im angeregten Zustand | : ca. 2 |

Lumineszenzabklingzeiten der angeregten Zustände:

$$: \tau_{(AH^*)} = 2.5 \text{ ns}$$
$$: \tau_{(A^{-*})} = 9.0 \text{ ns}$$

Im interessierenden Meßbereich (pH 2-4) liegen beide Formen (AH und A$^-$) vor. Der pK$_S$* im angeregten Zustand ist ca. 2 Einheiten kleiner als der pK$_S$ im Grundzustand. Hierdurch erfolgt im angeregten Zustand keine Protonierung der konjugierten Base (A$^{-*}$). Die Lumineszenzabklingrate $k_A$ der elektronisch angeregten Säure (AH*) ist größer als ihre Deprotonisierungsrate $k_{dp}$. Die strahlungslose Deexcitationsrate $k_C$ der elektronisch angeregten Säure (AH*) ist verschieden von der strahlungslosen Deexcitationsrate $k_C$ der elektronisch angeregten konjugierten Base (A$^{-*}$). Hierdurch ergeben sich unterschiedliche Lumineszenzabklingzeiten der angeregten Zustände ($\tau_{(AH^*)}$ = 2.5 ns, $\tau_{(A^{-*})}$ = 9.0 ns).

Weitere Beispiele für Indikatoren, deren Lumineszenzabklingzeit durch Säure-Basen-Reaktionen im elektronischen Grundzustand beeinflußt wird, sind folgende:

zu 1.1.b: 9-Aminoacridin

zu 1.2.a: 1-Hydroxy-acetylnaphthalin
Dihydroxyanthrachinon
4-Hydroxybenzonitril
9-Chloro-10-diethylaminomethylanthrazen

zu 1.2.b: Benzothiazolderivate
Benzooxazolderivate
Benzimidazolderivate
Azaindol
Methylsalicylat
Harman
Norharman

Salicylsäureamid

zu 1.2.c:     Biliverdinderivate

Porphyrinderivate

In einem Ausführungsbeispiel zu den unter 2. genannten Mechanismen wird ein geeigneter Indikator auf einem festen Träger immobilisiert und in die Probe eingetaucht. Die Anregung erfolgt monochromatisch mit einer Kurzzeitlichtquelle (z.B. Koaxialblitzlampe) und einem auf die Absorptionswellenlänge des Indikators abgestimmten Farbfilter (z.B. Interferenzfilter), die Detektion nach Abtrennung des Anregungslichtes durch ein Kantenfilter spektral breitbandig (z.B. mittels Photomultiplier oder pin-Photodiode). Die Ermittlung des pH-Wertes erfolgt wieder aus der gemessenen Abklingzeit über eine gespeicherte Eichfunktion.

Im folgenden seien nun einige konkrete Beispiele für erfindungsgemäße Indikatorsubstanzen unter Erläuterung ihrer Funktionsweise angeführt:

Beispiel zu 2.1.b.

Indikatorbase: **9(10H)-Acridinon**

| | |
|---|---|
| Anregungs- / Emissions-Maximum der konjugierten Säureform | : 399 / 456 nm |
| Anregungs- / Emissions-Maximum der Basenform | : 383 / 440 nm |
| Messbereich | : pH 0.5 - 2.5 |
| pKs der Säureform (BH$^+$) im Grundzustand | : 0.02 |
| pKs* der Säureform (BH$^{+*}$) im angeregten Zustand | : 1.7 |

Lumineszenzabklingzeiten der angeregten Zustände:

$: \tau_{(BH^{+*})} = 15$ ns

$: \tau_{(B^*)} = 26$ ns

Im interessierenden Meßbereich (pH 0.2-3.2) überwiegt die Basenform (B). Der pK$_S$* im angeregten Zustand ist 1.7 Einheiten größer als der pK$_S$ im Grundzustand. Hierdurch wird im interessierenden Meßbereich die Basenform (B) überwiegend angeregt. Die Lumineszenzabklingrate $k_A$ der elektronisch angeregten Base (B*) ist kleiner als ihre Protonierungsrate $k_p$, so daß eine Protonierung der Base (B*) im elektronisch angeregten Zustand erfolgt. Die Lumineszenzabklingrate $k_A$ der elektronisch angeregten Base (B*) und der elektronisch angeregten konjugierten Säure (BH$^{+*}$) sind verschieden. Hierdurch ergeben sich unterschiedliche Lumineszenzabklingzeiten der angeregten Zustände ($\tau_{(BH^{+*})} = 15$ ns, $\tau_{(B^*)} = 26$ ns).

Beispiel zu 2.2.b.

Indikatorsäure: **2-Napthol**

| | |
|---|---|
| Anregungs- / Emissions-Maximum der Säureform | : 328 / 356 nm |
| Anregungs- / Emissions-Maximum der konjugierten Basenform | : 348 / 410 nm |
| | |
| Messbereich | : pH 1.3 - 3.3 |
| pKs der Säureform (AH) im Grundzustand | : ca. 9.8 |
| pKs* der Säureform (AH*) im angeregten Zustand | : ca. 2.8 |

Lumineszenzabklingzeiten der angeregten Zustände:

$$: \tau_{(AH^*)} = 9.0 \text{ ns}$$
$$: \tau_{(A^{-*})} = 2.8 \text{ ns}$$

Im interessierenden Meßbereich (pH 1.3 - 3.3) liegt nur die Säureform (AH) vor. Der $pK_S^*$ im angeregten Zustand ist 7 Einheiten kleiner als der $pK_S$ im Grundzustand. Hierdurch wird im interessierenden Meßbereich nur die Säureform (AH) angeregt. Die Lumineszenzabklingrate $k_A$ der elektronisch angeregten Säure (AH*) ist kleiner als ihre Deprotonierungsrate $k_{dp}$, so daß eine Deprotonierung im elektronisch angeregten Zustand erfolgt. Die Lumineszenzabklingrate $k_A$ der elektronisch angeregten Säure (AH*) und der elektronisch angeregten konjugierten Base (A⁻*) sind verschieden. Hierdurch ergeben sich unterschiedliche Lumineszenzabklingzeiten der angeregten Zustände ($\tau_{(AH^*)}$ = 9.0 ns, $\tau_{(A^{-*})}$ = 2.8 ns).

Weitere Beispiele für Indikatoren, deren Lumineszenzabklingzeit durch Säure-Basen-Reaktionen im elektronisch angeregten Zustand beeinflußt wird, sind folgende:

zu 2.1.a:     Chinidin
                 Chinin
zu 2.1.b:     6-Methoxychinolin
zu 2.2.b:     1-Hydroxypyren
                 1-Hydroxypyren-3,6,8-trisulfonsäure
                 5-Aminoindazol

Die Erfindung wird im folgenden anhand von Zeichnungen näher erläutert. Es zeigen Fig. 1 und Fig. 2 Diagramme, in welchen auf der Abszisse der pH-Wert und auf der Ordinate Energieniveaus E in willkürlichen Einheiten aufgetragen sind.

In Fig. 1 erfolgt die Protonierung bzw. Dissoziation der Indikatorsubstanz im Grundzustand $S_o$. Der $pK_S$-Wert liegt im interessierenden Meßbereich M. Die Grundzustände der konjugierten Säure BH⁺ und der Base B des Indikators sind mit 1 und 2 bzw. im angeregten Zustand $S_1$ mit 1* und 2* bezeichnet. Im dargestellten Beispiel einer Indikatorbase liegt der $pK_S^*$-Wert in der pH-Skala oberhalb des Meßbereiches. Bei Vorliegen einer Indikatorsäure liegt der $pK_S^*$-Wert hingegen unterhalb des Meßbereiches M.

In Fig. 2 erfolgt die Protonierung $k_p$ der Indikatorbase B* im angeregten Zustand $S_1$. Der $pK_S^*$-Wert liegt im interessierenden Meßbereich M. Der $pk_S$-Wert im Grundzustand liegt unterhalb des interessierenden Meßbereiches M.

Sowohl in Fig. 1 als auch in Fig. 2 sind die Abklingzeiten $\tau_B$ und $\tau_S$ unterschiedlich. Die gemessene Lumineszenzabklingzeit $\tau$ ist in beiden grundlegenden Fällen eine Funktion der Lumineszenzabklingzeiten $\tau_B$ und $\tau_S$ wobei deren Gewichtung von dem in der Probe vorherrschenden pH-Wert abhängt.

**Patentansprüche**

1. Indikatorsubstanz für eine lumineszenzoptische Meßanordnung zur kontinuierlichen, reversiblen Messung des pH-Wertes einer Probe innerhalb eines interessierenden Meßbereiches (M), wobei die Probe mit der als Säure oder Base vorliegenden Indikatorsubstanz in zumindest indirektem Kontakt steht und die Lumineszenzabklingzeit $\tau$ der Indikatorsubstanz vom pH-Wert der Probe abhängt, **dadurch gekennzeichnet**, daß der pKs-Wert der Indikatorsubstanz in deren elektronischen Grundzustand ($S_0$) im interessierenden Meßbereich liegt, daß die Protonierungsrate $k_p$ der Base oder die Deprotonierungsrate $k_{dp}$ der Säure im angeregten Zustand ($S_1$, X) der Indikatorsubstanz kleiner ist als die Abklingrate $k_A$ des angeregten Zustandes, sowie daß die Lumineszenzabklingzeiten $\tau_S$ und $\tau_B$ der Säureformen (AH*, BH$^{+*}$) und der Basenformen (A$^{-*}$, B*) der Indikatorsubstanz verschieden sind.

2. Indikatorsubstanz nach Anspruch 1, **dadurch gekennzeichnet**, daß zumindest zwei angeregte Zustände ($S_1$, X) der Neutralform der Indikatorsubstanz, Base B* oder Säure AH*, relativ zueinander in umgekehrter Anordnung vorliegen als die korrespondierenden angeregten Zustände der ionischen Form der Indikatorsubstanz, konjugierte Säure BH$^{+*}$ oder konjugierte Base A$^{-*}$, sowie daß die strahlungslose Konversionsrate zwischen den zumindest zwei angeregten Zuständen der Neutralform größer ist als die Abklingrate $k_A$ der angeregten Zustände der Neutralform.

3. Indikatorsubstanz nach Anspruch 1 oder 2, **dadurch gekennzeichnet**, daß die Strahlungsabklingrate $k_R$ der angeregten Neutralform der Indikatorsubstanz, Base B* oder Säure AH*, und der angeregten ionischen Form der Indikatorsubstanz, konjugierte Säure BH$^{+*}$ oder konjugierte Base A$^{-*}$, unterschiedlich sind.

4. Indikatorsubstanz nach Anspruch 1 oder 2, **dadurch gekennzeichnet**, daß die strahlungslose Deexcitationsrate $k_C$ der angeregten Neutralform der Indikatorsubstanz, Base B* oder Säure AH*, und der angeregt ionischen Form der Indikatorsubstanz konjugierte Säure BH$^{+*}$ oder konjugierte Base A$^{-*}$, unterschiedlich sind.

5. Indikatorsubstanz für eine lumineszenzoptische Meßanordnung zur kontinuierlichen, reversiblen Messung des pH-Wertes einer Probe innerhalb eines interessierenden Meßbereiches (M), wobei die Probe mit der als Säure oder Base vorliegenden Indikatorsubstanz in zumindest indirektem Kontakt steht und die Lumineszenzabklingzeit $\tau$ der Indikatorsubstanz vom pH-Wert der Probe abhängt, **dadurch gekennzeichnet**, daß der pKs*-Wert der Indikatorsubstanz in deren elektronisch angeregten Zustand ($S_1$, X) im interessierenden Meßbereich liegt, daß die Protonierungsrate $k_p$ der Base oder die Deprotonierungsrate $k_{dp}$ der Säure im angeregten Zustand ($S_1$, X) der Indikatorsubstanz größer ist als die Abklingrate $k_A$ des angeregten Zustandes, sowie daß die Lumineszenzabklingzeiten $\tau_S$ und $\tau_B$ der Säureformen (AH*, BH$^{+*}$) und der Basenformen (A$^{-*}$, B*) der Indikatorsubstanz verschieden sind.

6. Indikatorsubstanz nach Anspruch 5, **dadurch gekennzeichnet**, daß zumindest zwei angeregte Zustände ($S_1$, X) der Neutralform der Indikatorsubstanz, Base B* oder Säure AH*, relativ zueinander in umgekehrter Anordnung vorliegen als die korrespondierenden angeregten Zustände der ionischen Form der Indikatorsubstanz, konjugierte Säure BH$^{+*}$ oder konjugierte Base A$^{-*}$, sowie daß die strahlungslose Konversionsrate zwischen den zumindest zwei angeregten Zuständen der Neutralform größer ist als die Abklingrate $k_A$ der angeregten Zustände der Neutralform.

7. Indikatorsubstanz nach Anspruch 5 oder 6, **dadurch gekennzeichnet**, daß die Strahlungsabklingrate $k_R$ der angeregten Neutralform der Indikatorsubstanz, Base B* oder Säure AH*, und der angeregten ionischen Form der Indikatorsubstanz, konjugierte Säure BH$^{+*}$ oder konjugierte Base A$^{-*}$, unterschiedlich sind.

8. Indikatorsubstanz nach Anspruch 5 oder 6, **dadurch gekennzeichnet**, daß die strahlungslose Deexcitationsrate $k_C$ der angeregten Neutralform der Indikatorsubstanz, Base B* oder Säure AH*, und der angeregt ionischen Form der Indikatorsubstanz, konjugierte Säure BH$^{+*}$ oder konjugierte Base A$^{-*}$, unterschiedlich sind.

9. Lumineszenzoptischer Sensor zur kontinuierlichen, reversiblen Messung des pH-Wertes einer Probe mit einer chemisch oder physikalisch immobilisierten Indikatorsubstanz nach einem der Ansprüche 1 bis 8.

## Claims

1. An indicator for use in a luminescence-optical configuration for continuous and reversible measurement of the pH of a sample within a relevant measuring range (M), the sample being at least in indirect contact with the indicator provided as an acid or base, and the luminescence decay time $\tau$ of the indicator depending on the pH of the sample, **wherein** the p$K_a$ value of the indicator in its electronic ground state ($S_0$) is in the relevant measuring range, and wherein the protonation rate $k_p$ of the base or deprotonation rate $k_{dp}$ of the acid in the excited state ($S_1$, X) of the indicator is lower than the decay rate $k_A$ of the excited state, and, further, wherein the luminescence decay times $\tau_S$ and $\tau_B$ of the acidic forms (AH*, BH$^{+*}$) and basic forms (A$^{-*}$, B*) of the indicator differ from each other.

2. An indicator as in claim 1, **wherein** at least two excited states ($S_1$, X) of the neutral form of the indicator, base B* or acid AH*, are in reverse order relative to each other as compared to the corresponding excited states of the ionic form of the indicator, conjugate acid BH$^{+*}$ or conjugate base A$^{-*}$, and wherein the radiationless conversion rate between the two or more excited states of the neutral form exceeds the decay rate $k_A$ of the excited states of the neutral form.

3. An indicator as in claim 1 or 2, **wherein** the radiation decay rates $k_R$ of the excited neutral form of the indicator, base B* or acid AH*, and the excited ionic form of the indicator, conjugate acid BH$^{+*}$ or conjugate base A$^{-*}$, differ from each other.

4. An indicator as in claim 1 or 2, **wherein** the radiationless deexcitation rate $k_C$ of the excited neutral form of the indicator, base B* or acid AH*, is different from that of the excited ionic form of the indicator, conjugate acid BH$^{+*}$ or conjugate base A$^{-*}$.

5. An indicator for use in a luminescence-optical configuration for continuous and reversible measurement of the pH of a sample within a relevant measuring range (M), the sample being at least in indirect contact with the indicator provided as an acid or base, and the luminescence decay time $\tau$ of the indicator depending on the pH of the sample, **wherein** the p$K_a$* value of the indicator in its electronically excited state ($S_1$, X) is in the relevant measuring range, and wherein the protonation rate $k_p$ of the base or deprotonation rate $k_{dp}$ of the acid in the excited state ($S_1$, X) of the indicator is higher than the decay rate $k_A$ of the excited state, and, further, wherein the luminescence decay times $\tau_S$ and $\tau_B$ of the acidic forms (AH*, BH$^{+*}$) and basic forms (A$^{-*}$, B*) of the indicator differ from each other.

6. An indicator as in claim 5, **wherein** at least two excited states ($S_1$, X) of the neutral form of the indicator, base B* or acid AH*, are in reverse order relative to each other as compared to the corresponding excited states of the ionic form of the indicator, conjugate acid BH$^{+*}$ or conjugate base A$^{-*}$, and wherein the radiationless conversion rate between the two or more excited states of the neutral form exceeds the decay rate $k_A$ of the excited states of the neutral form.

7. An indicator as in claim 5 or 6, **wherein** the radiation decay rates $k_R$ of the excited neutral form of the indicator, base B* or acid AH*, and the excited ionic form of the indicator, conjugate acid BH$^{+*}$ or conjugate base A$^{-*}$, differ from each other.

8. An indicator as in claim 5 or 6, **wherein** the radiationless deexcitation rate $k_C$ of the excited neutral form of the indicator, base B* or acid AH*, is different from that of the excited ionic form of the indicator, conjugate acid BH$^{+*}$ or conjugate base A$^{-*}$.

9. A luminescence-optical sensor for continuous and reversible measurement of the pH of a sample with the use of a chemically or physically immobilized indicator according to any of claims 1 to 8.

**Revendications**

1. Substance indicatrice pour une installation de mesure à luminescence optique, pour la mesure en continu, réversible du pH d'un échantillon dans une plage de mesure intéressante (M), l'échantillon étant au moins indirectement en contact avec la substance indicatrice sous forme d'acide ou de base, et le temps d'atténuation $\tau$ de la substance indicatrice dépend de la valeur du pH de l'échantillon, substance caractérisée en ce que la valeur pKs de la substance indicatrice pour son état électronique de base ($S_0$) se trouve dans la plage de mesure intéressante, et en ce que le coefficient de transformation protonique $k_p$ de la base ou le coefficient de transformation déprotonique $k_{dp}$ de l'acide à l'état d'excitation ($S_1$, X) de la substance indicatrice étant inférieur au coefficient d'atténuation de luminescence $k_A$ de l'état excité, et les temps d'atténuation de luminescence $\tau_S$ et $\tau_B$ des formes acide (AH*, BH$^+$*) et des formes base (A$^-$*, B*) de la substance indicatrice sont différents.

2. Substance indicatrice selon la revendication 1, caractérisée en ce qu'au moins deux états d'excitation ($S_1$, X) de la forme neutre de la substance indicatrice, base B* ou acide AH*, existent dans l'ordre réciproque, inverse, pour les états d'excitation correspondants de la forme ionique de la substance indicatrice, acide conjugué BH$^+$* ou base conjuguée A$^-$*, et le coefficient de conversion sans rayonnement entre au moins les deux états d'excitation de la forme neutre est supérieur au coefficient d'atténuation $k_A$ des états excités de la forme neutre.

3. Substance indicatrice selon la revendication 1 ou 2, caractérisée en ce que le coefficient d'atténuation du rayonnement $k_R$ de la forme neutre excitée de la substance indicatrice, base B* ou acide AH*, et celui de la forme ionique excitée de la substance indicatrice, acide conjugée BH$^+$* ou base conjuguée A$^-$*, sont différents.

4. Substance indicatrice selon la revendication 1 ou 2, caractérisée en ce que le coefficient de désexcitation sans rayonnement $k_C$ de la forme neutre excitée de la substance indicatrice, base B* ou acide AH*, et celui de la forme ionique excitée de la substance indicatrice, acide conjuguée BH$^+$* ou base conjugée A$^-$*, sont différents.

5. Substance indicatrice pour une installation de mesure à luminescence optique, pour la mesure en continu, réversible, du pH d'un échantillon dans une plage de mesure intéressante (M), l'échantillon dépendant de la substance indicatrice présente sous forme d'acide ou de base, qui est au moins en contact indirect et le temps d'atténuation de luminescence $\tau$ de la substance indicatrice dépend de la valeur du pH de l'échantillon, substance caractérisée en ce que la valeur pKs* de la substance indicatrice dans son état d'excitation électronique ($S_1$, X) se situe dans la plage de mesure intéressante, le coefficient de transformation protonique $k_p$ de la base ou le coefficient de transformation déprotonique $k_{dp}$ de l'acide à l'état excité ($S_1$, X) de la substance indicatrice étant supérieur au coefficient d'atténuation $k_A$ de l'état excité et les temps d'atténuation de luminescence $\tau_S$ et $\tau_B$ des formes acides (AH, BH$^+$*) et des formes de base (A$^-$*, B*) de la substance indicatrice sont différents.

6. Substance indicatrice selon la revendication 5, caractérisée en ce que l'on a au moins deux états d'excitation ($S_1$, X) de la forme neutre de la substance indicatrice, base B* ou acide AH*, qui sont présent dans l'ordre inversée par rapport aux états excités correspondant à la forme ionique de la substance indicatrice, acide conjuguée BH$^+$* ou base conjuguée A$^-$* et en ce que le coefficient de conversion sans rayonnement entre au moins deux états excités de la forme neutre est supérieur au coefficient d'atténuation de luminescence $k_A$ des états excités de la forme neutre.

7. Substance indicatrice selon la revendication 5 ou 6, caractérisée en ce que le coefficient d'atténuation de rayonnement de l'état excité $k_R$ de la forme neutre de la substance indicatrice, base B* ou acide AH*, et de la forme ionique excitée de la substance indicatrice, acide conjugué BH$^+$* ou base conjuguée A$^-$*, soient differents.

8. Substance indicatrice selon la revendication 5 ou 6, caractérisée en ce que le coefficient de désexcitation sans rayonnement $k_C$ de la forme neutre excitée de la substance indicatrice, base B* ou acide AH*, et

14

celui de la forme ionique excitée de la substance indicatrice, acide conjugué $BH^{+*}$ ou de la base conjuguée $A^{-*}$, sont différents.

9. Capteur de luminescence optique pour la mesure en continu réversible de la valeur du pH d'un échantillon avec une substance indicatrice bloquée de manière chimique ou physique, selon l'une des revendications 1 à 8.

_Fig.1_

_Fig. 2_